# EUROPEAN PATENT SPECIFICATION

(11) **EP 3 291 243 B1**
(45) Date of publication and mention of the grant of the patent: **23.01.2019**
(21) Application number: 15890665.1
(22) Date of filing: 30.04.2015
(51) Int. Cl.: G21F 9/00, G21C 17/01, B08B 1/04, G21C 17/013, G21C 19/20, B08B 1/00, G21C 13/02

(54) **DEVICE FOR CLEANING THE COVER FLANGE OF THE REACTOR VESSEL IN A NUCLEAR PLANT**
VORRICHTUNG ZUR REINIGUNG DES ABDECKUNGSFLANSCHES DES REAKTORBEHÄLTERS IN EINEM KERNKRAFTWERK
APPAREIL DE NETTOYAGE DE LA BRIDE DE FERMETURE DE LA CUVE DU RÉACTEUR D'UNE INSTALLATION NUCLÉAIRE

(43) Date of publication of application: 07.03.2018
(73) Proprietor: INGENIERIA Y MARKETING, S.A., 46015 Valencia (ES)
(72) Inventor: LACALLE BAYO, Jesús, 46015 Valencia (ES)
(74) Representative: Sanz-Bermell Martinez, Alejandro
(86) International application number: PCT/ES2015/070358
(87) International publication number: WO 2016/174277

(56) References cited:
- EP-A1- 0 131 755
- WO-A1-2015/040248
- WO-A1-2015/040248
- DE-A1- 3 731 472
- ES-A1- 8 306 968
- JP-B2- 2 875 568
- KIM JAE-HEE ET AL: "LAROB: Laser-Guided Underwater Mobile Robot for Reactor Vessel Inspection", IEEE / ASME TRANSACTIONS ON MECHATRONICS, IEEE SERVICE CENTER, PISCATAWAY, NJ, US, vol. 19, no. 4, 1 August 2014 (2014-08-01) , pages 1216-1225, XP011546548, ISSN: 1083-4435, DOI: 10.1109/TMECH.2013.2276889 [retrieved on 2014-04-28]
- WESTINGHOUSE ELECTRIC COMPANY: 'FlangeBot Remote Cleaning and Inspection of the Reactor Vessel Flange' NUCLEAR SERVICES/FIELD SERVICES October 2008, XP055325898
- KIM, J. H. ET AL.: 'LAROB: Laser -Guided Underwater Mobile Robot for Reactor Vessel Inspection''.' IEEE /ASME TRANSACTIONS ON MECHATRONICS vol. 19, no. 4, August 2014, pages 1216 - 1225, XP011546548
- R.O.V. TECHNOLOGIES, INC.: 'Remotely operated Radiation tolerant underwater camera and inspection systems for the nuclear power industry' XP009502175 Retrieved from the Internet: <URL:http://www.rovtech.com/Cleaning/Index. HTML> [retrieved on 2016-01-19]

## Description

This invention consists of an apparatus for cleaning the flange or perimeter surface on which the cover of the vessel containing the fuel of a thermoelectric nuclear power station rests. This apparatus is operated by remote control, in a submerged environment, and comprises a set of cleaning rollers, a drive assembly provided with one or more positioning probes in respect of the edge of the flange and a suction assembly fitted with a filter for collecting particles in which the drive assembly has means for adjustment in different angular positions for cleaning flanges of different diameters, and the probes are in turn adjustable in respect of the distance from the apparatus to the edge of the flange.

The sealing of the cover of a nuclear reactor at a thermoelectric nuclear power plant is well known to be of vital importance for the safety of the power plant. There are one or more annular channels in the cover on which the corresponding O-ring seals are placed, these normally being made of a relatively soft metal material, such as silver, silver alloys or alloys of other metals. Deposits and incrustations, normally debris from the aforementioned joint, are formed on the flange on which the cover rests, and particularly the joint seal. These deposits could jeopardise the sealing of the vessel and this flange thus has to be left in optimum condition. Although the deposits which might be left during the power plant's operation do not affect the sealing, when the cover is lifted and then fitted again these deposits can indeed affect the sealing if they are not properly removed.

This cleaning operation must therefore be carried out every time the cover of the reactor vessel is lifted, that is, during maintenance operations, and particularly during the operations for reloading fuel.

### State of the art

The flange has traditionally been cleaned manually. The personnel performing said cleaning operation is nevertheless exposed to doses of ionising radiation and although said dose is monitored and the operator is protected by suitable protective clothing, exposure periods are limited, there being an unnecessary risk for the person in any event.
US 5 346 584 describes a device for polishing the support base for a cover, such as the flange of the vessel of a reactor at a nuclear power plant, particularly conceived for running along an annular track surrounding the flange. A triangular frame is provided, resting on three angularly equidistant points of the flange, reducing its radial displacement. This is provided with polishing disks at the bottom, and it has wheels for moving along said annular track. This device involves different problems; first of all it is conceived for specific dimensions and geometry of the vessel flange, it has a tendency to undergo radial displacement along the route and although it has a probe, this is placed at a certain distance from the polishing device, which limits or prevents its use in certain types of flanges, diameters, etc.

Firms Westinghouse, Remote Ocean Systems and Texas Utilities developed a device for cleaning the flange of the cover of the vessel of a nuclear power plant which the first of these calls FlangeBot, in which there is a set of drive wheels with cleaning and drying devices. The device is self-propelled, with no cables, and radio-controlled. It has a cleaning roller and an absorbing roller, which can also be pulled along by the device. Like the device mentioned above, it does not however satisfactorily solve the matter of radial deviation from its course nor guarantee the position of the track in respect of the edge on which the cleaning operation is to be carried out, since it will depend on the operator's skill and the precision of the manoeuvre. What is more, because it does not remove the dirt, but places this on a roller, some particles may come off and be left on the section already covered.
At http://www.rovtech.com/Cleaning/Index.html one can also see a device for cleaning the surface of the flange of the reactor vessel of a thermoelectric nuclear power plant, which uses rotary cleaning pads. This is constructed as an arch to form the curve of the edge, with the pads at the ends and the drive system in the centre. To change the rotation radius the four supports of the pads have to be replaced; it has no evacuation system nor allows a variable distance from the edge to the cleaning surface.

Another robot for cleaning the flange of a nuclear reactor pressure vessel is known from document JP 2875568 B2. None of these antecedents is however adaptable to a variable flange diameter without replacing some part, nor is able to be adjusted so that the distance from the cleaning track to the edge of the flange is easily and effectively adjustable on a variable basis; it is furthermore desirable for the debris dislodged to be removed, which is done in this invention by means of a suction pump enabling the removal of said products from the surface and preventing them from being deposited again, while the cleaning is done by means of cleaning rollers which remove, but do not store, the dirt.
Furthermore, in the precursors it has been observed that the non-existence of any angular adjustment of the drive system causes a tendency to displace the head (the front zone) generally towards the inner edge of the flange, which means that the cleaning position is displaced in respect of the one desired and there is also a risk of falling into the vessel.
It is furthermore considered necessary to ensure not only the dislodging of the particles or debris from the flange, but also their effective removal, to prevent them from falling into the cavity of the vessel or from being deposited on the cleaned surface again after being dislodged.

### Description of the invention

This invention refers to a cleaning apparatus for the sealing flange of the vessel of the reactor at a nuclear plant as defined in claim 1. This apparatus comprises:
- a central body, which constitutes a casing closed at its sides and at its top, which houses an inner body with at least one and preferably a pair of cleaning rollers;
The apparatus may further comprise
a device for suction and evacuation of the dirt dislodged by the rollers; the suction device consists of a suction bell placed between the cleaning rollers, a suction pump and a filter placed at the outlet of the suction pump; the outlet from the filter has been placed laterally towards the rotation centre in order to prevent any interference with the guide bolts on the cover and with the electricity supply and movement and control wires; an articulated support for a front train and a articulated support for the rear train, in which at least one of said front and/or rear trains is provided with a drive system; According to the invention, the apparatus further comprises a means for adjusting the angular position of the articulated support of the front train in respect of the central body; and a means for adjusting the angular position of the articulated support of the rear train in respect of the central body; The apparatus may further comprise a lateral probe placed in the train which determines the distance from the cleaning track to the inner edge of the flange; an means for adjusting the distance from the front and rear lateral probes in respect of the respective front and rear trains.
As was already stated above, the cleaning apparatus of this invention is made up of a central body, which houses the cleaning elements. In particular, this central body is made up of an outer casing and an inner body; the inner body is placed in a floating arrangement in the outer casing, and is provided with joining means, such as guide-slots or guide rods, enabling vertical displacement between the casing and the inner body but which keep them connected; where applicable this may also comprise springs for adjusting the tension between said inner body and said casing, determining the force which said cleaning rollers apply.
The wear caused to the cleaning items, particularly to the rollers, in the event of said rollers being located at a fixed height in respect of the support structure, as is the case of all the background inventions described, results in a reduction or loss of contact between the cleaning item and the surface to be cleaned. The solution proposed in this invention means that it is the weight of the inner body which exerts the pressure of the rollers on the surface to be cleaned, whatever the state of wear of said rollers, said pressure being where required corrected by springs or other holding and regulating items. The inner body thus comprises a floating chassis which will hold the cleaning rollers, and normally also means for driving said rollers (motors, transmissions, etc.), and the suction items (bell, pump, filter). This means that the pressure applied by the rollers on the surface will always be regular, regardless of the state of wear of the cleaning surface or of the deformations in said surface, in this case of the rollers.

According to an embodiment of the present invention, the casing of the central body will comprise one or more lugs for lifelines and/or for extraction from the pool in which the flange is located by means of a crane.
The central body is fitted with front and rear supports. These supports are provided with a housing for a rotary element such as a bearing. The rotary element holds a wheel support, said wheel support being capable of angular adjustment in respect of the corresponding front and rear support on which this is held. To this end the wheel supports are provided with devices for adjusting the annular position in respect of the respective front and rear supports. More specifically, these adjustment devices are formed of a pair of screws which act against a respective stop; when the screws are retracted (not meeting the stop), the wheel support may turn in respect of the corresponding front or rear support up to the position in which the end of one of the screws makes contact with the corresponding stop; in the required position the screws are adjusted so that this prevents rotation in one direction and the opposite one (each of the screws in the wheel support will limit one rotation direction against the corresponding stop on the front or rear support), for which reason the wheel support will be placed at a certain angle in respect of said front or rear supports. The front and/or rear supports hold respective motors, which by means of a transmission system transfers the rotation movement to the wheels. According to a specific embodiment, the wheels constitute a continuous roller divided into two parts, in which the transmission elements for the movement are arranged between said two parts.

Each of the front and rear wheel supports has a corresponding probe on one of its sides. The probe consists of a freely rotating wheel, which will be placed on the vessel, resting on the inner edge of the flange. This probe is located on a probe support, provided with a slot in which said probe is held in the required position.

The devices for regulating the angular position of the wheel supports and of the distance (position) at which the probe is located may be provided with graduated scales for absolute accuracy.

As regards the cleaning device, as was already stated, this is located in the inner body of the central body and consists of a set of cleaning rollers, normally two, which rotate in opposite directions driven by respective motors, wiping the dirt off the surface towards a suction bell arranged between said cleaning rollers; the rollers are placed with an axis perpendicular to the movement direction of the apparatus. The axles of the rollers are easily removable from the respective rollers.

According to a preferential embodiment, the suction bell may be provided with a suction pump, which has a filter element at its outlet and laterally to the assembly (on the side where the rotation centre of the apparatus is located). According to a second embodiment, the suction bell is provided with connection means for an outlet from an external suction device.

The device will have lighting means, normally placed in the central body, as well as a camera for transmitting and/or recording images.
The motors which drive the different components of the apparatus are electric and are powered by means of external connection cables. The apparatus could optionally be provided with an electrical power battery to provide the device with greater autonomy, although said option is less preferable through involving other disadvantages, such as the weight of the apparatus, its size and manoeuvrability, and limiting the operation time to the duration of the battery.

### Brief description of the drawings

In order to illustrate the following explanation, we are enclosing 7 pages of drawings with this descriptive report in which six figures represent as an example, without constituting any limitation thereby, one form of embodiment of this invention, and in which:

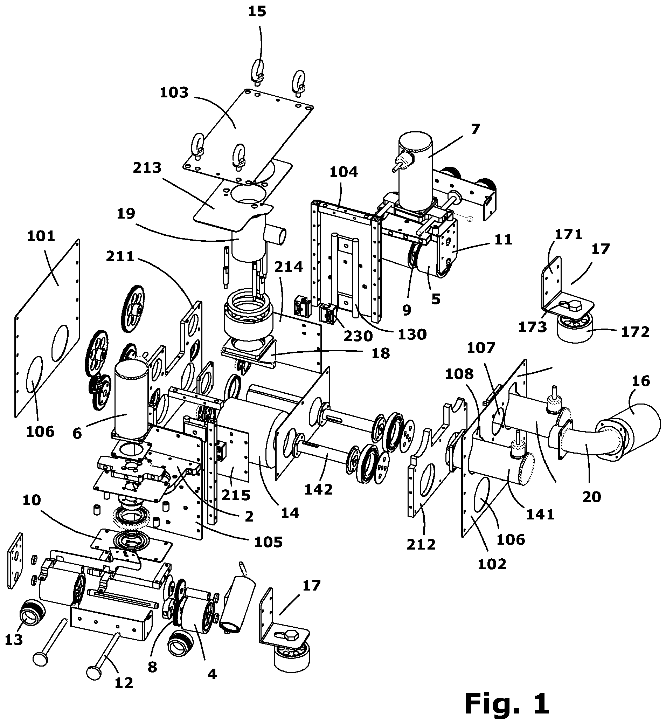

- Figure 1: shows an exploded view of a dismantled detail of the cleaning apparatus according to the invention;

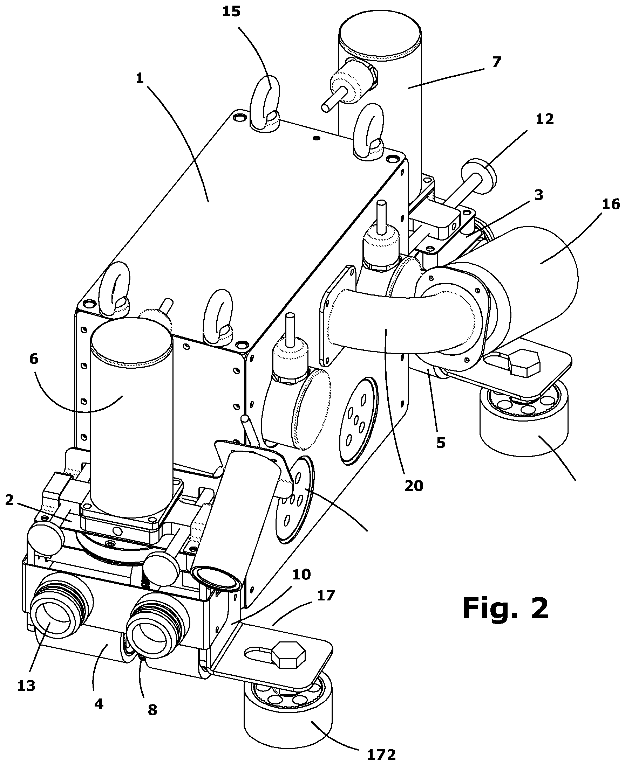

- Figure 2: shows a perspective view of the assembled apparatus of Figure 1

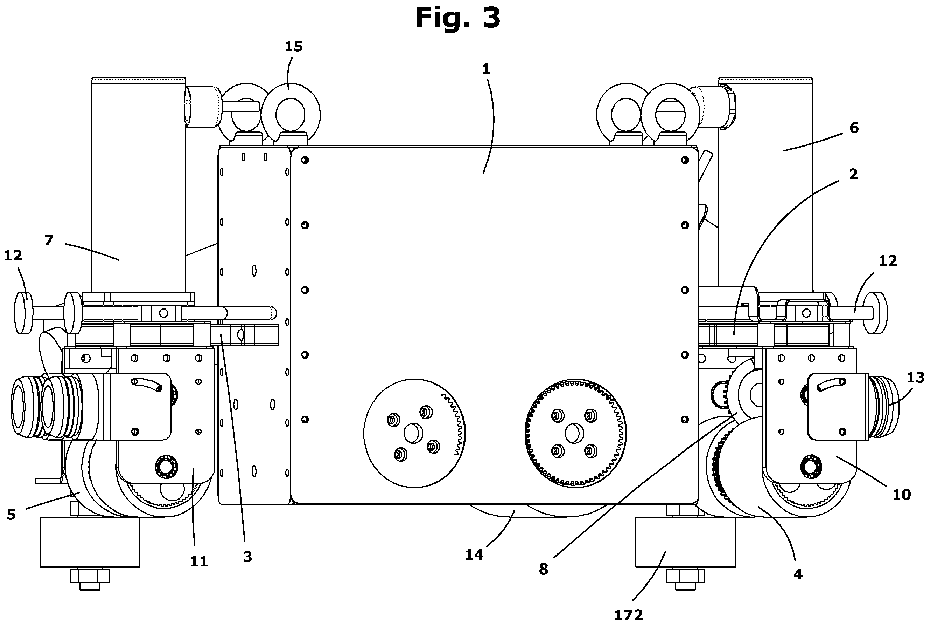

- Figure 3: shows a view from the outer side (the one furthest from the rotation centre) of the apparatus of Figure 1;

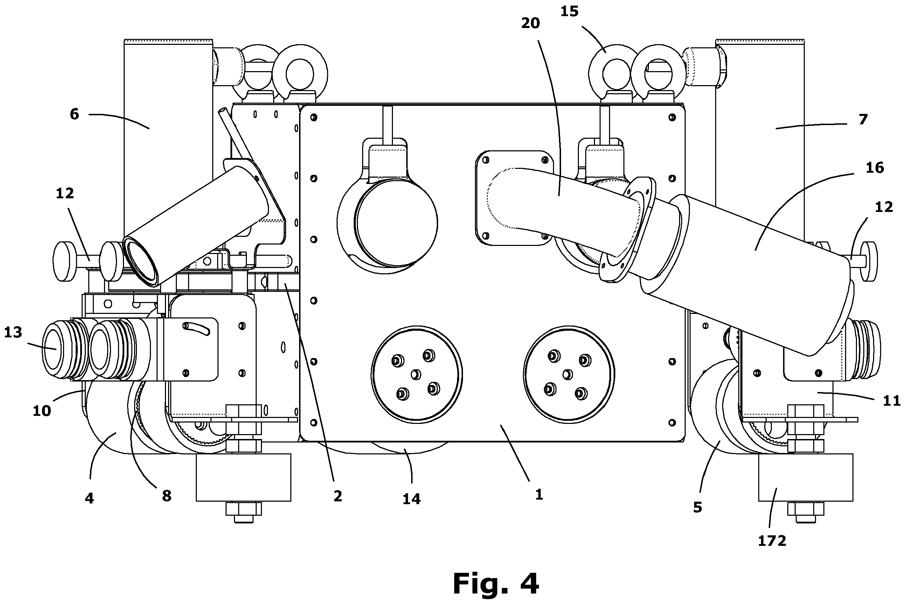

- Figure 4: shows a view from the inner side (the one closest to the rotation centre), of the apparatus of Figures 1 and 2;

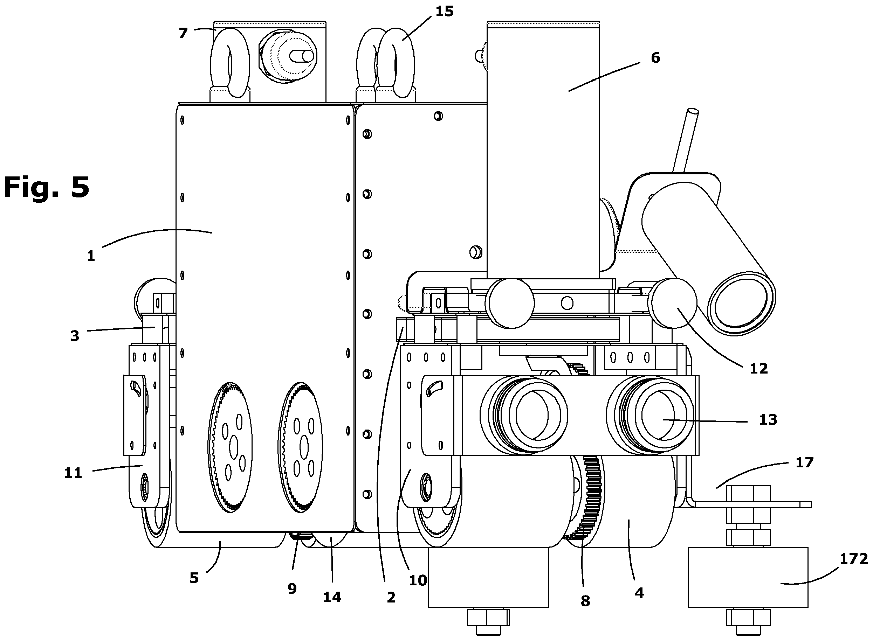

- Figure 5: shows a view from an oblique viewpoint on the horizontal plane in which one can appreciate the front/rear train (according to the movement direction) and corresponding drive rollers or wheels, as well as the mechanism for transmitting the movement from the corresponding motor to said rollers;

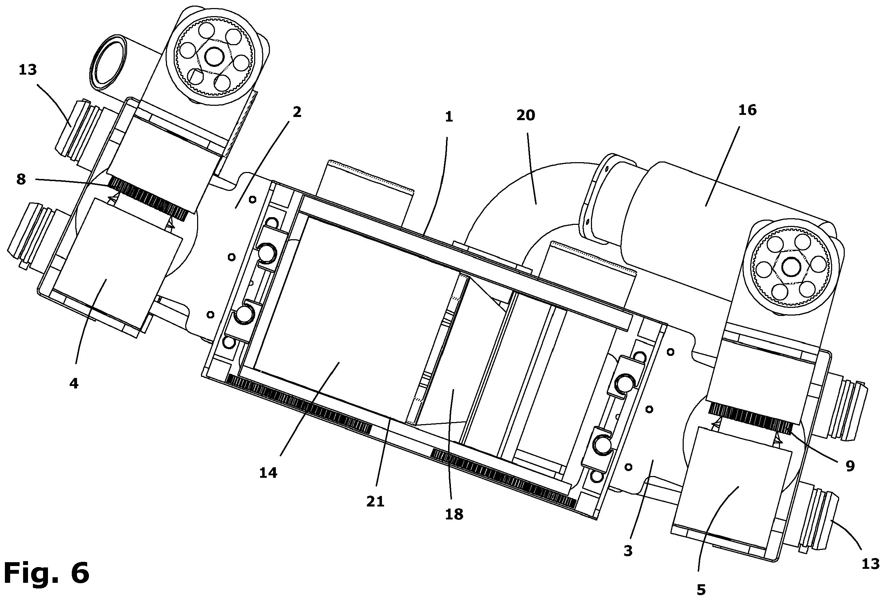

- Figure 6: shows a lower view of the apparatus according to the invention in which one can appreciate the degree of tilt of the front and rear wheels; and

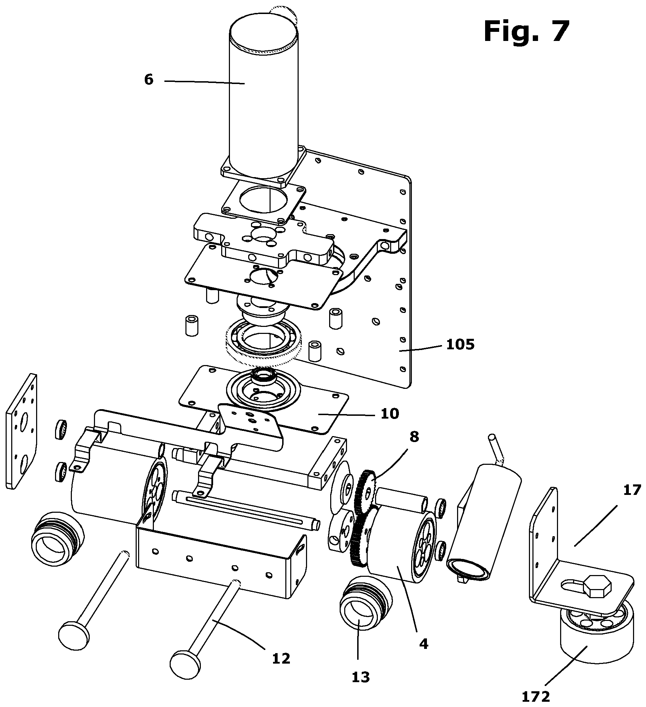

- Figure 7: shows an extended detail of the front train.

The following reference numbers can be appreciated in these figures:
- 1: central body
- 2: front support
- 3: rear support
- 4: front drive wheels or rollers
- 5: rear drive wheels or rollers
- 6: drive motor for the front rollers
- 7: drive motor for the rear rollers
- 8: transmission element for the front rollers
- 9: transmission element for the rear rollers
- 10: rotary support for the front rollers
- 11: rotary support for the rear rollers
- 12: devices for adjusting the angular position
- 13: lighting devices
- 14: cleaning rollers
- 15: outer anchorages or coupling hitches; lugs
- 16: particle filter
- 17: probe assembly
- 18: suction bell
- 19: suction pump
- 20: support for the particle filter
- 21: floating inner body
- 101: right-hand lateral plate of the outer casing of the central body (seen from behind looking forward)
- 102: left-hand lateral plate of the outer casing of the central body (seen from behind looking forward)
- 103: upper plate of the outer casing of a central body
- 104: rear plate of the outer casing of the central body
- 105: front plate of the outer casing of the central body
- 106: holes in the outer casing for the axles of the cleaning rollers
- 107: hole in the outer casing for the filter conduit
- 108: hole in the outer casing of the drive motors for the cleaning rollers
- 130: guiding devices for the floating body in the outer casing of the central body
- 141: drive motors for the cleaning rollers
- 142: axles for the cleaning rollers
- 171: probe support
- 172: slot for holding the probe
- 173: probe wheel or roller
- 211: right-hand lateral plate of the floating inner body
- 212: left-hand lateral plate of the floating inner body
- 213: upper plate of the floating inner body
- 214: rear plate of the floating inner body
- 215: front plate of the floating inner body
- 230: guide devices for the outer casing of the central body in the floating inner body

### Description of the preferential forms of embodiment

An apparatus for cleaning the sealing flange of the vessel of the reactor of a nuclear power plant is described, made up of a central body (1) which houses the cleaning media, and which also comprises front and rear trains made up of respective front (2) and rear (3) supports which hold the front and rear drive media respectively.

The drive media consist of front (4) and (5) drive wheels or rollers respectively, which are driven by respective motors (6,7), through the corresponding transmission elements (8,9).

The front (2) and rear (3) supports are made up of a plate or set of plates forming a bracket or fixed part. The motors (6,7) are placed in a fixed arrangement in said front (2) and rear (3) supports. The front (2) and rear (3) supports hold the front (10) and rear (11) wheel supports. These wheel supports are held in such a way as to be able to turn around a vertical axis, for appropriate positioning and control of the turning radius. The wheel supports (10,11) also have means for adjusting and setting the angular position in respect of the front (2) and rear (3) supports. When the apparatus has to be placed over the flange to proceed to clean this, the annular part of the flange that has to be cleaned will have to be determined, adjusting the inclination of the front and rear wheel supports for their travel to adapt to the item that has to be cleaned. To set the angular position of the wheel supports (10,11) there are devices for adjustment of the angular position (12), and specifically setting screws; more specifically still, it has been designed for said devices for adjusting the angular position to be pairs of setting screws, in which one of these will limit rotation in one direction and the other in the opposite direction. The setting screws are held in a wheel support (10,11) into which these are screwed and whose end can move back or forward, and act against a corresponding stop in the central body (1) or in the front or rear supports (2,3). According to a specific embodiment, the stop consists of one of the walls of the central body (1).

In accordance with a specific embodiment, the drive wheels (4,5) are divided into two portions of different length, and the corresponding transmission bodies (8,9) transmit the movement to the axle of said rollers (4,5) from the connecting zone of these portions (central, if these are identical). This asymmetry means that the drive motors (6,7) can be more satisfactorily located in the ideal position.

The front wheel support (10) and/or the rear wheel support (11) are provided with a probe (17) which regulates the distance of the apparatus to the inner edge of the flange. In a preferential embodiment the probe (17) consists of a wheel or roller (173) rotating on a vertical axis which is held in a support (171). This support is provided with a slot (172) along which the probe wheel (173) can be secured in position, this position determining the greater or lesser distance to the edge of the flange in the cleaning travel. This support may be provided with a graduated scale. As the device moves forward in its cleaning travel, the probe will correct or prevent any outward deviation.

Insofar as the motors (6,7) for powering the drive rollers (4,5) are independent, it has been seen that altering the speed of one of these in respect of the other corrects the trajectory, either getting closer to the edge, when the speed of the front one is greater, or moving away from this when the speed of the rear one is greater.

According to one form of preferential embodiment the central body is made up of two bodies, an outer casing (which is the visible part of the central body) and a floating inner body (21).

The central body (1), and particularly the floating inner body (21) contained in this, holds:
▪ the cleaning media, and particularly a pair of cleaning rollers (14) which move in the opposite rotation direction, moving the dirt from the floor towards the space lying between them;
▪ the drive motors of the cleaning media;
▪ a suction bell (18), whose suction mouth is located in the space lying between the cleaning rollers (14);
▪ a suction pump (19), according to one form of embodiment, or a mouth for a suction conduit, according to another form of embodiment.

The floating inner body (21) is made up of a box open at the bottom, consisting of a front plate (215), a rear plate (214), and lateral plates (211,212), as well as an upper plate (213), provided with attachment media by means of screws and/or tabs. The supports of the cleaning rollers (14) and their drive motors (141) are located between the lateral plates, and normally the upper plate (213) will hold the suction bell and the suction pump (19).

The front (215) and rear (214) plates have, in a particular embodiment, guiding devices (230) in respect of the outer casing.

Hence, the floating inner body (21) is able to move (in a vertical direction) in respect of the outer casing, which enables it to adapt to any small steps, if there were any, and to adjust the relative position in accordance with the wear of the wheels. The force at which the cleaning rollers (14) press on the surface to be cleaned will be that of the weight of the floating inner body (21), although said weight may be adjusted or corrected with additional weight, or reduced with floats or sustaining springs to increase or limit the force which the cleaning rollers (14) exert on the floor to be cleaned. This allows the force of incidence on the floor, and thus the cleaning effectiveness, to be independent of the degree of wear of the brushes. Securing media for the relative position between the floating inner body (21) and the outer casing have nevertheless been designed.

The outer casing is, according to a specific embodiment, made up of lateral plates (101,102) a front plate (105) a rear plate (104) and an upper plate (103), joined together by screws and/or tabs. The outer casing also takes the form of a prismatic box open at the bottom. The front (105) and rear (104) plates are internally provided with different guiding devices (130) complementary to the ones located (230) in the floating inner body (21).

The lateral plates (101,102) are provided with holes (106) giving access to the axles (142) of the cleaning rollers (14) and through which these axles (142) can be dismantled and extracted, and with them the cleaning rollers (14).

Furthermore, at least one of the lateral plates (101,102), and especially the one facing towards the centre of the reactor vessel, is provided with holes (108) through which the drive motors of the cleaning rollers emerge. Since the floating inner body (21) is vertically mobile in respect of the outer casing, these holes (108), must enable the displacement of the motors which are joined to the floating inner body, for which reason these holes (108) substantially have the shape of a vertical slotted hole and are dimensioned so that those motors can move vertically in these from an upper end position of the floating inner body in respect of the outer casing to a lower end position of said floating inner body (21).

Between the outlet of the suction pump (19) located in the floating inner body (21) and the outer casing there is a bellows-type conduit, which will absorb the variations in relative position, and will enable the debris collected to be taken towards a particle filter (16). The particle filter (16) is placed at the end of a support (20) which is fixed and held on the outer casing.
The support is arranged so that the particle filter (16) is located on the side of the central body closest to the centre of the vessel and whose free end is located at a lower height than the end for connection with the support (20) which holds this; this means that there is a lower risk of releasing particles such as radioactive particles outside the filter during dismantling operations.
The apparatus is provided with one or more spotlights, as well as one or more cameras for picking up images, and preferably also means for transmitting images. This enables the situation before and behind the cleaning operation to be observed, determining with greater reliability whether this needs to be gone over again or whether the process can be taken as finished. In accordance with a particular embodiment, the spotlights are located on the front (2) and rear (4) supports, as well as the camera or cameras for taking pictures.

The upper plate of the outer casing of the central body is provided with a set of coupling lugs (15).

## Claims

1. An apparatus for cleaning the sealing flange of the vessel of the reactor of a nuclear power plant, the apparatus comprising drive means for moving the apparatus along the perimeter of the flange, and means for wiping off the dirt lying on that flange, the apparatus further comprising:
• a central body (1), provided with the means for wiping off the dirt; said central body comprising an outer casing which has a front support (2) and a rear support (3) fixed to this;
• a front train holding a front wheel support (10);
• a rear train holding a rear wheel support (11);
• a device (12) for adjusting the angular position of the front wheel support in respect of the central body; and
• a device (12) for adjusting the angular position of the rear wheel support in respect of the central body; **characterized**
**in that** the central body comprises a floating inner body (21), said floating inner body holding the means for wiping off the dirt, wherein said floating body is joined to the outer casing of the central body so as to allow its relative vertical displacement;
wherein the floating inner body is provided with a guiding device over the outer casing, and the outer casing is provided with guides for guiding the floating inner body;
the guiding device between the floating inner body and the outer casing being provided with means for securing said floating inner body and said outer casing in the relative position required.

2. A cleaning apparatus, according to claim 1, **characterised in that** the front train and/or the rear train is made up of a support consisting in turn of a plate or set of plates forming a bracket or fixed part, and **in that** said bracket holds a motor for driving the front and/or rear wheel support respectively arranged in vertical position and **in that** the front and/or rear wheel support constitutes a moving part which is fitted under the front and/or rear support respectively and is able to rotate in respect of said support.

3. A cleaning apparatus, according to either of claims 1 or 2, **characterised in that** the adjustment device consists of at least one screw and normally a pair of screws held to the moving part, each of which is placed on one side of the rotation axle of the front support, in which each of the screws limits the rotation of the front support in one of the rotation directions when these rest against the corresponding stop arranged in the fixed part, wherein the stop of the screws is a front wall or a rear wall, respectively, of the central body.

4. A cleaning apparatus, according to any of claims 1 to 3, **characterised in that** the front wheel support and/or rear wheel support hold respective front and/or rear drive rollers which are divided into two parts, the body for transmitting the movement being placed between these two parts.

5. A cleaning apparatus, according to claim 4, **characterised in that** one of the two parts into which the front and/or cleaning rollers are divided is of greater width than the other part.

6. A cleaning apparatus, according to any of claims 1 to 5, **characterised in that** the join between the floating body and the outer casing is provided with means for adjusting the tension, such as sustaining springs.

7. A cleaning apparatus, according to any of claims 1 to 6, **characterised in that** the means for wiping off the dirt consist of a pair of front and rear cleaning rollers driven by respective motors, with mutually inverse movement, so that both rollers wipe the dirt off the floor towards the space between them.

8. A cleaning apparatus, according to any of claims 1 to 7, **characterised in that** the outer casing of the central body is formed of lateral plates, a front plate, a rear plate and an upper plate, able to be joined by means of screws and/or tabs.

9. A cleaning apparatus, according to claim 8, **characterised in that** the lateral plates forming the outer casing of the central body are provided with holes through which the drive motors of the cleaning rollers emerge, **in that** said holes substantially have the form of a vertical slotted hole and are dimensioned in such a way that said motors can move vertically on these from an upper end position of the floating inner body in respect of the outer casing to a lower end position of said floating inner body.

10. A cleaning apparatus, according to any of claims 7 to 9, **characterised in that** the floating inner body also comprises a suction bell, whose absorption inlet is located between the pair of cleaning rollers, wherein the suction bell comprises one of the following:
a suction pump connected to the suction bell; or
a connection for an external suction inlet.

11. A cleaning apparatus, according to claim 10, **characterised in that** at least one of the lateral plates forming the outer casing of the central body is provided with a support for a particle filter, and **in that** the support for the particle filter is connected to the suction pump by means of a bellows-type conduit.

12. A cleaning apparatus, according to claim 11, **characterised in that** this also comprises a particle filter, which is located on the side of the central body closest to the centre of the vessel, and whose free end is located at a lower height than the end for joining to the corresponding support.

13. A cleaning apparatus, according to any of claims 8 to 12, **characterised in that** the lateral plates forming the outer casing of the central body are provided with holes for access to the roller axles, and **in that** the rollers are provided with axles removable from at least one of the lateral ends, through said holes.

14. A cleaning apparatus, according to any of claims 1 to 13, **characterised in that** at least one of the front and rear wheel supports is provided with a probe which adjusts the distance from the central body to the inner edge of the flange.

15. A cleaning apparatus, according to claim 14, **characterised in that** the probe consists of a wheel held on a vertical axis and is placed on a slotted support and can be adjusted in different positions along said slotted support, the slotted support is provided with a graduated scale.

16. A cleaning apparatus, according to any of claims 1 to 15, **characterised in that** the central body is provided with one of more of the following elements:
• Spotlights for lighting
• One or more cameras for taking pictures
• A set of coupling lugs at the upper plate of the outer casing of said central body.

## Patentansprüche

1. Vorrichtung zum Reinigen des Dichtungsflansches des Reaktorbehälters eines Kernkraftwerks, wobei die Vorrichtung Antriebsmittel zum Bewegen der Vorrichtung entlang des Umfangs des Flansches und Mittel zum Abstreifen des auf diesem Flansch liegenden Schmutzes umfasst, wobei die Vorrichtung ferner folgendes umfasst:
• einen Zentralkörper (1), der mit den Mitteln zum Abstreifen des Schmutzes versehen ist; wobei der Zentralkörper ein Außengehäuse umfasst, das einen vorderen Träger (2) und einen daran befestigten hinteren Träger (3) aufweist;
• einen vorderen Zug, der einen Vorderradträger (10) trägt;
• einen hinteren Zug, der einen Hinterradträger (11) trägt;
• eine Einrichtung (12) zum Einstellen der Winkellage des Vorderradträgers in Bezug auf den Zentralkörper; und
• eine Einrichtung (12) zum Einstellen der Winkellage des Hinterradträgers in Bezug auf den Zentral körper;
**dadurch gekennzeichnet, dass** der Zentralkörper einen schwimmenden Innenkörper (21) umfasst, wobei der schwimmende Innenkörper die Mittel zum Abstreifen des Schmutzes trägt, wobei der schwimmende Körper mit dem Außengehäuse des Zentralkörpers verbunden ist, um seine relative vertikale Verschiebung zu ermöglichen;
wobei der schwimmende Innenkörper mit einer Führungseinrichtung über dem äußeren Gehäuse versehen ist, und das Außengehäuse mit Führungen zum Führen des schwimmenden Innenkörpers versehen ist;
wobei die Führungseinrichtung zwischen dem schwimmenden Innenkörper und dem Außengehäuse mit Mitteln zum Befestigen des schwimmenden Innenkörpers und des Außengehäuses in der erforderlichen Relativposition versehen ist.

2. Reinigungsvorrichtung nach Anspruch 1, **dadurch gekennzeichnet, dass** der vordere Zug und/oder der hintere Zug aus einem Träger bestehen, der wiederum aus einer Platte oder einem Plattensatz besteht, wobei eine Halterung oder ein festes Teil gebildet wird, und dass die Halterung einen Motor zum Antreiben des jeweils in vertikaler Position angeordneten Vorder- und/oder Hinterradträgers trägt und dass der Vorder- und/oder Hinterradträger ein bewegliches Teil bildet, das jeweils unter dem vorderen und/oder hinteren Träger angebracht ist und in Bezug auf den Träger drehbar ist.

3. Reinigungsvorrichtung nach einem der Ansprüche 1 oder 2, **dadurch gekennzeichnet, dass** die Einstelleinrichtung aus mindestens einer Schraube und normalerweise einem Paar Schrauben besteht, die an dem beweglichen Teil gehalten werden, von denen jede auf einer Seite der Drehachse des vorderen Trägers angeordnet ist, wobei jede der Schrauben die Drehung des vorderen Trägers in eine der Drehrichtungen begrenzt, wenn diese gegen den entsprechenden im festen Teil angeordneten Anschlag anliegen, wobei der Anschlag der Schrauben jeweils eine Vorderwand bzw. eine Rückwand des Zentralkörpers ist.

4. Reinigungsvorrichtung nach einem der Ansprüche 1 bis 3, **dadurch gekennzeichnet, dass** der Vorderradträger und/oder der Hinterradträger jeweilige zweigeteilte vordere und/oder hintere Antriebsrollen tragen, wobei der Körper zur Übertragung der Bewegung zwischen diesen beiden Teilen angeordnet ist.

5. Reinigungsvorrichtung nach Anspruch 4, **dadurch gekennzeichnet, dass** eines der beiden Teile, in die die vorderen Rollen und/oder Reinigungsrollen unterteilt sind, eine größere Breite aufweist als das andere Teil.

6. Reinigungsvorrichtung nach einem der Ansprüche 1 bis 5, **dadurch gekennzeichnet, dass** die Verbindung zwischen dem schwimmenden Körper und dem Außengehäuse mit Mitteln zum Einstellen der Spannung, wie beispielsweise Stützfedern, versehen ist.

7. Reinigungsvorrichtung nach einem der Ansprüche 1 bis 6, **dadurch gekennzeichnet, dass** die Mittel zum Abstreifen des Schmutzes aus einem Paar von vorderen und hinteren Reinigungsrollen bestehen, die von jeweiligen Motoren angetrieben werden, mit gegenseitiger umgekehrter Bewegung, so dass beide Rollen den Schmutz vom Boden in Richtung des zwischen ihnen liegenden Raumes abstreifen.

8. Reinigungsvorrichtung nach einem der Ansprüche 1 bis 7, **dadurch gekennzeichnet, dass** das Außengehäuse des Zentralkörpers aus Seitenplatten, einer Frontplatte, einer Rückplatte und einer Oberplatte gebildet ist, die mittels Schrauben und/oder Laschen verbindbar sind.

9. Reinigungsvorrichtung nach Anspruch 8, **dadurch gekennzeichnet, dass** die das Außengehäuse des Zentralkörpers bildenden Seitenplatten mit Löchern versehen sind, durch die die Antriebsmotoren der Reinigungsrollen austreten, dass die Löcher im Wesentlichen die Form eines vertikalen geschlitzten Lochs aufweisen und so bemessen sind, dass sich die Motoren von einer oberen Endposition des schwimmenden Innenkörpers in Bezug auf das Außengehäuse bis zu einer unteren Endposition des schwimmenden Innenkörpers vertikal darauf bewegen können.

10. Reinigungsvorrichtung nach einem der Ansprüche 7 bis 9, **dadurch gekennzeichnet, dass** der schwimmende Innenkörper ferner eine Saugglocke umfasst, deren Absorptionseinlass zwischen dem Paar von Reinigungsrollen angeordnet ist, wobei die Saugglocke eines der folgenden umfasst:
eine mit der Saugglocke verbundene Saugpumpe; oder
einen Anschluss für einen äußeren Sauganschluss.

11. Reinigungsvorrichtung nach Anspruch 10, **dadurch gekennzeichnet, dass** mindestens eine der das Außengehäuse des Zentralkörpers bildenden Seitenplatten mit einem Träger für einen Partikelfilter versehen ist, und dass der Träger für den Partikelfilter über eine balgähnliche Leitung mit der Saugpumpe verbunden ist.

12. Reinigungsvorrichtung nach Anspruch 11, **dadurch gekennzeichnet, dass** sie auch einen Partikelfilter umfasst, der auf der Seite des Zentralkörpers angeordnet ist, die der Mitte des Behälters am nächsten liegt, und dessen freies Ende auf einer niedrigeren Höhe als das Ende zum Verbinden mit dem entsprechenden Träger angeordnet ist.

13. Reinigungsvorrichtung nach einem der Ansprüche 8 bis 12, **dadurch gekennzeichnet, dass** die das Außengehäuse des Zentralkörpers bildenden Seitenplatten mit Löchern für den Zugang zu den Rollenachsen versehen sind, und dass die Rollen mit Achsen versehen sind, die von mindestens einem der Seitenenden durch die Löcher abnehmbar sind.

14. Reinigungsvorrichtung nach einem der Ansprüche 1 bis 13, **dadurch gekennzeichnet, dass** mindestens eines der Vorder- und Hinterradträger mit einer Sonde versehen ist, die den Abstand vom Zentralkörper zur Innenkante des Flansches anpasst.

15. Reinigungsvorrichtung nach Anspruch 14, **dadurch gekennzeichnet, dass** die Sonde aus einem Rad besteht, das auf einer vertikalen Achse gehalten wird und auf einem geschlitzten Träger angeordnet ist und in verschiedenen Positionen entlang des geschlitzten Trägers verstellbar ist, wobei der geschlitzte Träger mit einer Messskala versehen ist.

16. Reinigungsvorrichtung nach einem der Ansprüche 1 bis 15, **dadurch gekennzeichnet, dass** der Zentralkörper mit einem oder mehreren der folgenden Elemente versehen ist:
• Strahler für die Beleuchtung
• Eine oder mehrere Kameras für die Aufnahme von Bildern
• Ein Satz von Kupplungslaschen an der oberen Platte des Außengehäuses des Zentralkörpers.

## Revendications

1. Appareil pour le nettoyage de la bride de fermeture de la cuve du réacteur d'une centrale nucléaire, l'appareil comprenant des moyens d'entraînement pour déplacer l'appareil le long du périmètre de la bride, et des moyens pour essuyer les impuretés reposant sur cette bride, l'appareil comprenant en outre :
• un corps central (1), pourvu des moyens pour essuyer les impuretés ; ledit corps central comprenant une enveloppe externe qui a un support avant (2) et un support arrière (3) fixés à celle-ci ;
• un train avant qui soutient un support de roues avant (10) ;
• un train arrière qui soutient un support de roues arrière (11) ;
• un dispositif (12) pour ajuster la position angulaire du support de roues avant par rapport au corps central ; et
• un dispositif (12) pour ajuster la position angulaire du support de roues arrière par rapport au corps central ;
**caractérisé en ce que** le corps central comprend un corps interne flottant (21), ledit corps interne flottant soutenant les moyens pour essuyer les impuretés, dans lequel ledit corps flottant est relié à l'enveloppe externe du corps central de sorte à permettre son déplacement vertical relatif ;
dans lequel le corps interne flottant est pourvu d'un dispositif de guidage sur l'enveloppe externe, et l'enveloppe externe est pourvue de guides pour le guidage du corps interne flottant ;
le dispositif de guidage entre le corps interne flottant et l'enveloppe externe étant pourvu de moyens pour la fixation dudit corps interne flottant et ladite enveloppe externe dans la position relative requise.

2. Appareil de nettoyage, selon la revendication 1, **caractérisé en ce que** le train avant et/ou le train arrière est constitué d'un support consistant à son tour en une plaque ou un ensemble de plaques formant un appui ou partie fixe, et **en ce que** ledit appui soutient un moteur pour entraîner le support de roues avant et/ou arrière respectivement disposé en position verticale et **en ce que** le support de roues avant et/ou arrière constitue une partie mobile qui est installée sous le support avant et/ou arrière respectivement et qui est capable de tourner par rapport audit support.

3. Appareil de nettoyage, selon l'une quelconque des revendications 1 ou 2, **caractérisé en ce que** le dispositif d'ajustement consiste en au moins une vis et normalement une paire de vis soutenues à la partie mobile, dont chacune est placée sur un côté de l'axe de rotation du support avant, dans lequel chacune des vis limite la rotation du support avant dans l'un des sens de rotation lorsque ces dernières reposent contre la butée correspondante disposée dans la partie fixe, dans lequel la butée des vis est une paroi avant ou une paroi arrière, respectivement, du corps central.

4. Appareil de nettoyage, selon l'une quelconque des revendications 1 à 3, **caractérisé en ce que** le support de roues avant et/ou support de roues arrière soutiennent des rouleaux d'entraînement avant et/ou arrière respectifs qui sont divisés en deux parties, le corps pour la transmission du mouvement étant placé entre ces deux parties.

5. Appareil de nettoyage, selon la revendication 4, **caractérisé en ce que** l'une des deux parties auxquelles sont divisés les rouleaux de nettoyage avant et/ou arrière est de plus grande largeur que l'autre partie.

6. Appareil de nettoyage, selon l'une quelconque des revendications 1 à 5, **caractérisé en ce que** la liaison entre le corps flottant et l'enveloppe externe est pourvue de moyens pour ajuster la tension, tels que les ressorts de retenue.

7. Appareil de nettoyage, selon l'une quelconque des revendications 1 à 6, **caractérisé en ce que** les moyens pour essuyer les impuretés consistent en une paire de rouleaux de nettoyage avant et arrière entraînés par des moteurs respectifs, avec un mouvement mutuellement inverse, de sorte que les deux rouleaux essuient les impuretés du sol vers l'espace entre eux.

8. Appareil de nettoyage, selon l'une quelconque des revendications 1 à 7, **caractérisé en ce que** l'enveloppe externe du corps central est formée de plaques latérales, une plaque avant, une plaque arrière et une plaque supérieure, capables d'être reliées au moyen de vis et/ou languettes.

9. Appareil de nettoyage, selon la revendication 8, **caractérisé en ce que** les plaques latérales formant l'enveloppe externe du corps central sont pourvues d'orifices par lesquels les moteurs d'entraînement des rouleaux de nettoyage émergent, **en ce que** lesdits orifices ont sensiblement la forme d'un orifice rainuré vertical et sont dimensionnés de façon à ce que lesdits moteurs puissent se déplacer verticalement sur ces derniers d'une position finale supérieure du corps interne flottant par rapport à l'enveloppe externe à une position finale inférieure dudit corps interne flottant.

10. Appareil de nettoyage, selon l'une quelconque des revendications 7 à 9, **caractérisé en ce que** le corps interne flottant comprend également une cloche d'aspiration, dont l'entrée d'absorption est située entre la paire de rouleaux de nettoyage, dans lequel la cloche d'aspiration comprend l'un des éléments suivants :
une pompe d'aspiration raccordée à la cloche d'aspiration ; ou
un raccordement pour une entrée d'aspiration externe.

11. Appareil de nettoyage, selon la revendication 10, **caractérisé en ce qu'**au moins l'une des plaques latérales formant l'enveloppe externe du corps central est pourvue d'un support pour un filtre à particules, et **en ce que** le support pour le filtre à particules est raccordé à la pompe d'aspiration au moyen d'un conduit du type à soufflet.

12. Appareil de nettoyage, selon la revendication 11, **caractérisé en ce qu'**il comprend également un filtre à particules, qui est situé sur le côté du corps central le plus proche du centre de la cuve, et dont l'extrémité libre est située à une hauteur inférieure à l'extrémité pour la liaison au support correspondant.

13. Appareil de nettoyage, selon l'une quelconque des revendications 8 à 12, **caractérisé en ce que** les plaques latérales formant l'enveloppe externe du corps central sont pourvues d'orifices pour l'accès aux axes des rouleaux, et **en ce que** les rouleaux sont pourvus d'axes amovibles d'au moins l'une des extrémités latérales, par lesdits orifices.

14. Appareil de nettoyage, selon l'une quelconque des revendications 1 à 13, **caractérisé en ce qu'**au moins l'un des supports de roues avant et arrière est pourvu d'une sonde qui ajuste la distance du corps central au bord interne de la bride.

15. Appareil de nettoyage, selon la revendication 14, **caractérisé en ce que** la sonde consiste en une roue soutenue sur un axe vertical et est placée sur un support rainuré et peut être ajustée dans différentes positions le long dudit support rainuré, le support rainuré est pourvu d'une échelle graduée.

16. Appareil de nettoyage, selon l'une quelconque des revendications 1 à 15, **caractérisé en ce que** le corps central est pourvu de l'un de plusieurs des éléments suivants :
• Projecteurs pour l'éclairage
• Un ou plusieurs appareils photo pour la prise de photos
• Un ensemble d'ergots de couplage sur la plaque supérieure de l'enveloppe externe dudit corps central.
